# EUROPEAN PATENT SPECIFICATION

(11) **EP 3 756 804 B1**
(45) Date of publication and mention of the grant of the patent: **01.05.2024**
(21) Application number: 19182642.9
(22) Date of filing: 26.06.2019
(51) Int. Cl.: B23B 51/10

(54) **TAPERED COUNTERSINK DRILL BIT**
KEGELSENKERBOHRER
FORET CONIQUE DE TYPE FRAISE

(43) Date of publication of application: 30.12.2020
(73) Proprietor: Fong Prean Industrial Co., Ltd, Kaohsiung City Taiwan (TW)
(72) Inventor: LIN, Teng-Hung, Kaohsiung City, Taiwan (TW)
(74) Representative: Treeby, Philip David William

(56) References cited:
- EP-A1- 0 936 016
- CN-A- 102 941 369
- FR-A5- 2 190 031
- US-A- 2 897 695

## Description

### FIELD OF THE INVENTION

The present invention is related to tapered countersink drill bit.

### BACKGROUND OF THE INVENTION

US 2 897 695 A describes a tapered countersink drill bit comprising: at least two screwing knifes and at least two screwing trenches being formed between two adjacent screwing knifes; the screwing knifes and the screwing trenches being extended from a front end of a rod body; each screwing knife being formed by a left lateral side and a right lateral side; each screwing knife comprising: a substantially linear front drilling head configured to form a protrusion from the longitudinal axis of the tapered countersink drill bit; a tapered portion formed at a backside of the front drilling head; an outer diameter of a front end of the tapered portion being equal to that of a rear end of the front drilling head; a rear drilling head formed at a backside of the tapered portion; an outer diameter of a rear end of the tapered portion being equal to that of a front end of the rear drilling head; the outer diameter of the front drilling head being smaller than that of the rear drilling head.

In the prior art for forming a screw with screwing trenches, the drill with a smaller outer diameter is used to drill a through hole in a work piece. Then the drill is removed and a knife with large outer diameter is located on the through hole so as to form the screwing head of the screw. However, in this prior art, two steps are necessary for forming screw head. Furthermore this working method has two defects.

Two steps are needed and thus the quality for forming the screw is greatly affected by the worker. Furthermore two working processes are necessary and thus it is time inefficiency.

To improve the defect in the prior art, an improved method is to serially connect two drills of different outer diameters coaxially so as to form as a combined drill to simplify the process for forming the trenches in the screw head. In this combination, the drill of small size is assembled at a front end of the drill of larger size by a fixing stud. However, this structure has following defects. That is, the lifetime of the structure is shorter and the structure is weak due to usage of the fixing stud. The knifes and dreg removing trenches of the front and rear drills are not continuous and thus the dregs are not removed smoothly. The dregs generate a large resistance to affect the operation of drilling speed and production rate.

Therefore, there is an eager demand for a novel tapered countersink drill bit which can improve the defects in the prior art so as to prolong the lifetime of the screw and increasing the production rate.

### SUMMARY OF THE INVENTION

Accordingly, for improving above mentioned defects in the prior art, the object of the present invention is to provide a tapered countersink drill bit, wherein the front drill, the tapered portion, the rear drill and the rod body are formed as an integral structure. The screwing knifes and screwing trenches have identical screwing angle and specific design as above mentioned so as to remove dregs easily and quickly in drilling operation.

To achieve above object, the present invention provides a tapered countersink drill bit according to claim 1.

### BRIEF DESCRIPTION OF THE DRAWINGS

Fig. 1 is a perspective view showing the first embodiment of the present invention, where three screwing knifes and three screwing trenches are shown.
Fig. 2 is a front view of Fig. 1.
Fig. 3 is a light side view of Fig. 2.
Fig. 4 is a perspective view showing the second embodiment of the present invention, where two screwing knifes and two screwing trenches are shown.
Fig. 5 is a right side view of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope of the present invention defined in the appended claims.

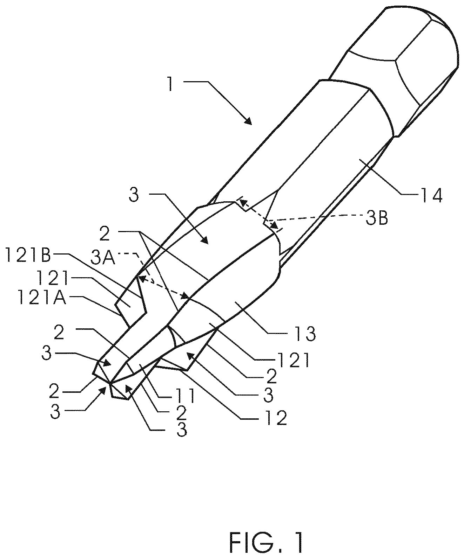

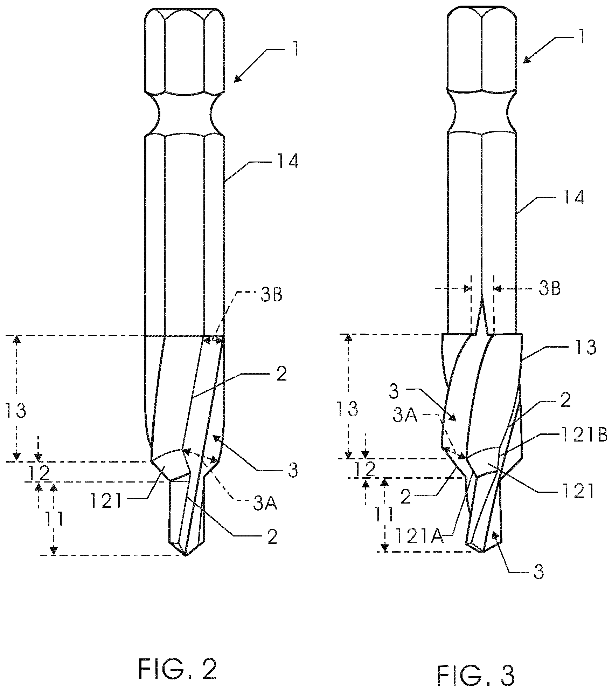

With reference to Figs. 1 to 3, a preferred embodiment of the present invention is illustrated. The drilling head of the present invention (having three screwing knifes and three screwing dreg removing recesses) includes:
At least two screwing knifes 2 are included and at least one two screwing trenches 3 are formed between two adjacent screwing knifes 2. The screwing knifes 2 and the screwing trenches 3 are extended from a front end of a polygonal rod body 14.

Each screwing knife is formed by a left lateral side 121A and a right lateral side 121B. A length of an edge of the left lateral side 121 A is shorten than that of an edge of the right lateral side 121B.

Each screwing knife 2 includes the following portions:
A front drilling head 11 is included.
A tapered portion 12 is formed at a backside of the front drilling head 11. An outer diameter of a front end of the tapered portion 12 is equal to that of a rear end of the front drilling head 11. An outer diameter of a front end of the tapered portion 12 is smaller than that of a rear end of the tapered portion 12.
A rear drilling head 13 is formed at a backside of the tapered portion 12. An outer diameter of a rear end of the tapered portion 12 is equal to that of a front end of the rear drilling head 13. An outer diameter of the front drilling head 11 is smaller than that of the rear drilling head 13.

The screwing angle of each screwing knife 2 is identical from the front drilling head 11 to the rear drilling head 13; and the screwing angle of each screwing trench 3 is identical from the front drilling head 11 to the rear drilling head 13.

A width 3A between two adjacent knifes at a front end of the rear drilling head 13 is longer than a width 3B between two knifes at rear ends of two rear drilling head 13.

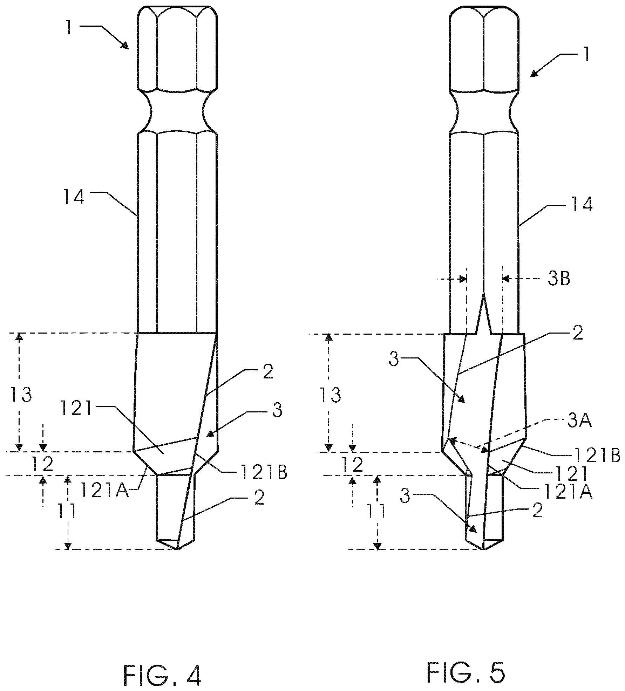

With reference to Figs. 4 and 5, another embodiment of the present invention is illustrated. The drilling head of the present invention (having two screwing knifes and two screwing dreg removing recesses) includes:
Two screwing knifes 2 are included and two screwing trenches 3 are formed between two adjacent screwing knifes 2. The screwing knifes 2 and the screwing trenches 3 are extended from a front end of a polygonal rod body 14.

Each screwing knife 2 is formed by a left lateral side 121A and a right lateral side 121B. A length of an edge of the left lateral side 121 A is shorten than that of an edge of the right lateral side 121B.

Each screwing knife 2 includes the following portions:
A front drilling head 11 is included.

A tapered portion 12 is formed at a backside of the front drilling head 11. An outer diameter of a front end of the tapered portion 12 is equal to that of a rear end of of the front drilling head 11. An outer diameter of a front end of the tapered portion 12 is smaller than that of a rear end of the tapered portion 12.

A rear drilling head 13 is formed at a backside of the tapered portion 12. An outer diameter of a rear end of the tapered portion 12 is equal to that of a front end of the rear drilling head 13. An outer diameter of the front drilling head 11 is smaller than that of the rear drilling head 13.

The screwing angle of each screwing knife 2 is identical from the front drilling head 11 to the rear drilling head 13; and the screwing angle of each screwing trench 3 is identical from the front drilling head 11 to the rear drilling head 13.

A width 3A between two adjacent knifes at a front end of the rear drilling head 13 is longer than a width 3B between two knifes at rear ends of two rear drilling head 13.

Therefore, the front drilling head, the tapered portion, the rear drilling head and the rod body are formed as an integral structure. The screwing knifes and screwing trenches have identical screwing angle and specific design as above mentioned so as to remove dregs easily and quickly in drilling operation.

The present invention is thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. A tapered countersink drill bit comprising:
at least two screwing knifes (2) and at least two screwing trenches (3) being formed between two adjacent screwing knifes (2); the screwing knifes (2) and the screwing trenches (3) being extended from a front end of a polygonal rod body (14);
each screwing knife being formed by a left lateral side (121A) and a right lateral side (121B); a length of an edge of the left lateral side (121 A) being shorter than that of an edge of the right lateral side (121B);
each screwing knife (2) comprising:
a front drilling head (11);
a tapered portion (12) formed at a backside of the front drilling head (11); an outer diameter of a front end of the tapered portion (12) being equal to that of a rear end of the front drilling head (11);
a rear drilling head (13) formed at a backside of the tapered portion (12); an outer diameter of a rear end of the tapered portion (12) being equal to that of a front end of the rear drilling head (13); the outer diameter of the front drilling head (11) being smaller than that of the rear drilling head (13);
wherein the screwing angle of each screwing knife (2) is identical from the front drilling head (11) to the rear drilling head (13); and a screwing angle of each screwing trench (3) being identical from the front drilling head (11) to the rear drilling head (13);
a width (3A) between two adjacent knifes (2) at a front end of the rear drilling head (13) is longer than a width (3B) between the two adjacent knifes (2) at a rear end of the rear drilling head (13).

2. The tapered countersink drill bit as claimed in claim 1, wherein the outer diameter of the front end of the tapered portion (12) is smaller than that of the rear end of the tapered portion (12).

## Patentansprüche

1. Sich verjüngender Senkbohrer, umfassend:
mindestens zwei Schraubschneiden (2) und mindestens zwei Schraubnuten (3), die zwischen zwei benachbarten Schraubschneiden (2) gebildet sind, wobei die Schraubschneiden (2) und die Schraubnuten (3) aus einem vorderen Ende eines Polygonalstabkörpers (14) verlängert sind,
wobei jede Schraubschneide durch eine linke Seite (121A) und eine rechte Seite (121B) gebildet ist, wobei eine Länge einer Kante der linken Seite (121A) kürzer als die einer Kante der rechten Seite (121B) ist,
wobei jede Schraubschneide (2) Folgendes umfasst:
einen vorderen Bohrkopf (11),
einen sich verjüngenden Abschnitt (12), der an einer Rückseite des vorderen Bohrkopfs (11) gebildet ist, wobei ein Außendurchmesser eines vorderen Endes des sich verjüngenden Abschnitts (12) gleich dem eines hinteren Endes des vorderen Bohrkopfs (11) ist,
einen hinteren Bohrkopf (13), der an einer Rückseite des sich verjüngenden Abschnitts (12) gebildet ist, wobei ein Außendurchmesser eines hinteren Endes des sich verjüngenden Abschnitts (12) gleich dem eines vorderen Endes des hinteren Bohrkopfs (13) ist, wobei der Außendurchmesser des vorderen Bohrkopfs (11) kleiner als der des hinteren Bohrkopfs (13) ist,
wobei der Schraubwinkel jeder Schraubschneide (2) vom vorderen Bohrkopf (11) zum hinteren Bohrkopf (13) identisch ist und ein Schraubwinkel jeder Schraubnut (3) vom vorderen Bohrkopf (11) zum hinteren Bohrkopf (13) identisch ist,
wobei eine Weite (3A) zwischen zwei benachbarten Schneiden (2) an einem vorderen Ende des hinteren Bohrkopfs (13) länger als eine Weite (3B) zwischen den zwei benachbarten Schneiden (2) an einem hinteren Ende des hinteren Bohrkopfs (13) ist.

2. Sich verjüngender Senkbohrer nach Anspruch 1, wobei der Außendurchmesser des vorderen Endes des sich verjüngenden Abschnitts (12) kleiner als der des hinteren Endes des sich verjüngenden Abschnitts (12) ist.

## Revendications

1. Foret de fraisage conique comportant :
au moins deux couteaux de vissage (2) et au moins deux tranchées de vissage (3) qui sont formées entre deux couteaux de vissage adjacents (2) ; les couteaux de vissage (2) et les tranchées de vissage (3) s'étendant depuis une extrémité avant d'un corps de tige polygonale (14) ;
chaque couteau de vissage étant formé par un côté latéral gauche (121A) et un côté latéral droit (121B) ; une longueur d'un bord du côté latéral gauche (121A) étant plus courte que celle d'un bord du côté latéral droit (121B) ;
chaque couteau de vissage (2) comportant :
une tête de perçage avant (11) ;
une partie conique (12) formée à l'arrière de la tête de perçage avant (11) ; un diamètre extérieur d'une extrémité avant de la partie conique (12) étant égal à celui d'une extrémité arrière de la tête de perçage avant (11) ;
une tête de perçage arrière (13) formée à l'arrière de la partie conique (12) ; un diamètre extérieur d'une extrémité arrière de la partie conique (12) étant égal à celui d'une extrémité avant de la tête de perçage arrière (13) ; le diamètre extérieur de la tête de perçage avant (11) étant inférieur à celui de la tête de perçage arrière (13) ;
dans lequel l'angle de vissage de chaque couteau de vissage (2) est identique de la tête de perçage avant (11) à la tête de perçage arrière (13) ; et un angle de vissage de chaque tranchée de vissage (3) est identique de la tête de perçage avant (11) à la tête de perçage arrière (13) ;
une largeur (3A) entre deux couteaux adjacents (2) au niveau d'une extrémité avant de la tête de perçage arrière (13) est plus longue qu'une largeur (3B) entre les deux couteaux adjacents (2) au niveau d'une extrémité arrière de la tête de perçage arrière (13).

2. Foret de fraisage conique selon la revendication 1, dans lequel le diamètre extérieur de l'extrémité avant de la partie conique (12) est inférieur à celui de l'extrémité arrière de la partie conique (12).
